# EUROPÄISCHE PATENTSCHRIFT

(11) **EP 3 882 411 B1**
(45) Veröffentlichungstag und Bekanntmachung des Hinweises auf die Patenterteilung: **03.08.2022**
(21) Anmeldenummer: 21156289.7
(22) Anmeldetag: 10.02.2021
(51) Int. Cl.: E04B 1/61, F16B 5/00, F25D 23/06

(54) **VERBINDUNGSELEMENTE ZUR ANORDNUNG ZWEIER WANDELEMENTE ANEINANDER**
CONNECTING ELEMENTS FOR ARRANGING TWO WALL ELEMENTS RELATIVE TO EACH OTHER
ÉLÉMENTS DE LIAISON DESTINÉS À L'AGENCEMENT DE DEUX ÉLÉMENTS MURAUX L'UN SUR L'AUTRE

(30) Priorität: 18.03.2020 DE 102020107453
(43) Veröffentlichungstag der Anmeldung: 22.09.2021
(73) Patentinhaber: Steinbach & Vollmann GmbH, 42579 Heiligenhaus (DE)
(72) Erfinder: GOTTSCHLING, Reinhard, 45289 Essen (DE)
(74) Vertreter: Ostriga Sonnet Wirths & Vorwerk

(56) Entgegenhaltungen:
- DE-A1- 2 708 081
- DE-A1-102004 042 864

## Beschreibung

Die Erfindung betrifft einen Verbinder zur Kopplung mehrerer Wandelemente, wie Wandpaneele, insbesondere Isolierpaneele, aneinander, mittels derer Räume, insbesondere Kühlräume aufgebaut werden,
- mit einer Kupplung, die ein Lager für einen Riegelhaken und einen Riegelhaken aufweist, der aus einer Ruhelage in eine Eingriffslage schwenkbar und in eine Riegellage bewegbar ist,
- mit einem Kloben, der über eine in einem Lager einsitzende Riegelstange verfügt,
wobei der Riegelhaken in seiner Riegellage die Riegelstange hintergreift,
- mit einem Gehäuse von Kupplung oder Kloben, welches eine Gehäusedurchtrittsöffnung aufweist, welche der Riegelhaken bei seiner Schwenkbewegung von der Ruhelage in die Eingriffslage durchtritt.

Ein gattungsgemäßer Verbinder für Wandelemente in Form von Isolierpaneelen ist beispielsweise aus DE 10 2004 042 864 A1 bekannt. Er besteht aus zwei unterschiedlichen Bauteilen, dem sogenannten Kloben und der sogenannten Kupplung. Ein vornehmlicher Anwendungszweck ist das Verbinden von Isolierpaneelen, aus denen Kühlräume aufgebaut werden bzw. mittels derer Kühlräume isoliert werden. Die Isolierpaneele bestehen aus einem umlaufenden Rahmen, der üblicherweise beidseitig ein Blech trägt. Der Rahmen verfügt über Aussparungen, in die Kloben bzw. Kupplung eingesetzt werden. Sodann wird ein Isolierschaum in den von Rahmen und Blechbeplankung gebildeten Zwischenraum eingespritzt, der beim Aushärten die Gehäuse von Kloben und Kupplung fest im Isolierschaum verankert. Die Gehäuse weisen hierzu eine entsprechend mit Rippen versehene Außenoberfläche auf, in deren Zwischenräume der Isolierschaum eindringt. Auf diese Weise ergibt sich beim Aushärten des Isolierschaums eine formschlüssige Verbindung zwischen Kloben- bzw. Kupplungsgehäuse und dem Isolierpaneel.

Jedem Kloben in einem ersten Isolierpaneel ist eine Kupplung in einem zweiten Isolierpaneel zugeordnet. Der Kloben verfügt in seinem Gehäuse über eine Riegelstange, die Kupplung verfügt über einen schwenkbaren Riegelhaken. Die Paneele werden, Kloben zu Kupplung ausgerichtet, aufeinandergesetzt. Sodann wird der Riegelhaken mittels eines Werkzeugs, beispielsweise einem Inbusschlüssel, aus einer Ruhelage in eine Eingriffslage ausgeschwenkt. Hierbei durchtritt der Riegelhaken zunächst die Gehäuseöffnung des Kupplungsgehäuses und sodann die Gehäuseöffnung des Klobengehäuses und dringt so in das Klobengehäuse ein. In Eingriffslage hintergreift der Riegelhaken die Riegelstange.

Um einen festen und sicheren Sitz der Paneele aneinander zu gewährleisten, wird nunmehr die rotative Schwenkbewegung des Riegelhakens in eine lineare Zugbewegung umgesetzt, sodass der Riegelhakten in das Riegelgehäuse zurückgeführt wird und hierbei durch Hintergreifen der Riegelstange die Paneele miteinander verspannt.

Um Kupplung und Kloben beim Herstellungsprozess der Paneele ausrichtungskorrekt in den Rahmen vorzumontieren, verfügen aus dem Stand der Technik bekannte Gehäuse über Montagelaschen. Die Montagelaschen verfügen über eine Ausnehmung unterschiedlichen Durchmessers. Der Paneelrahmen verfügt über Montagebolzen mit jeweils zu einer Aufnahme korrespondierendem Durchmesser. Insofern lassen sich Kupplung und Kloben nur in einer definierten Ausrichtung am Rahmen vormontieren.

Die DE 10 2004 042 864 A1 hat es sich zur Aufgabe gesetzt, einen vereinfacht aufgebauten Paneelverbinder vorzustellen. Sie sieht hierzu ein Gehäuse vor, welches sowohl Lagerstellen für den Riegelhaken als auch die Riegelstange vorsieht. Die Riegelstange wird von außen in das Lager eingesetzt, wobei sie eine Schutzwand zu durchbrechen hat. Der hierfür erforderliche Kraftaufwand erfordert ein Werkzeug zum Einsetzten der Riegelstange.

Der Riegelhaken umfasst ein Hakenteil, eine Exzenterscheibe sowie eine Welle. Haken und Exzenterscheibe werden über die Durchtrittsöffnung in das Gehäuse eingesetzt, die Achse wird dann von außen in das entsprechende Lager eingesetzt und greift in den Exzenter ein. Auch hier verfügt das Gehäuse über eine Schutzwandung über der zu nutzenden Öffnung zum Einschieben der Achse. Auch hier ist zum Einsetzen der Achse ein Werkzeug erforderlich. Die als Abdichtung zwischen Gehäuse und Riegelstange bzw. Gehäuse und Achse dienenden Schutzwandungen erschweren das Schwenken des Riegelhakens.

Beim Einschäumen werden die Verbinder umschlossen. In den dem Ansatz des Betätigungswerkzeugs zum Drehen des Riegelhakens dienen Werkzeugöffnungen verbleibt in der Regel eine Luftblase, die das Eindringen von Schaum verhindert. Die Werkzeugöffnungen werden nach dem Ausschäumen durch das Setzen einer Bohrung in das Wandelement zugänglich gemacht. Eventuell eingedrungener Schaum lässt sich mit dem Betätigungswerkzeug entfernen.

Auch DE 27 08 081 A1 offenbart einen gattungsgemäßen Verbinder. Dieser bildet eine Verschlusswand aus, die die Werkzeugeinsetzöffnung des Gehäuses verschließt. Diese Verschlusswand kann bei der Fertigung des Gehäuses im Spritzgießverfahren hergestellt werden.

Bei einigen Herstellungsverfahren ist es nicht ausgeschlossen, dass Schaummaterial in den Bereich der Durchtrittsöffnung für den Riegelhaken gelangt und hierüber in Kupplung oder Kloben eindringt. Dies ist als nachteilig anzusehen, weil die Funktionsfähigkeit des Paneelverbinders hierdurch zumindest beeinträchtigt sein kann, teilweise ist sie auch nicht mehr gegeben. Es sind dann Anstrengungen erforderlich, um das eingetretene Schaummaterial zu entfernen. Wenn dies nicht in ausreichendem Maße möglich ist, muss das Paneel als Ausschuss gewertet werden, was die Herstellungskosten in die Höhe treibt.

DE 202 08 021 U zeigt ebenfalls einen Paneelverbinder. Dieser verfügt über einteilige Gehäuse für Kupplung und Kloben, wobei die Kupplung für den Austausch des Hakens optimiert ist. Die den Haken schwenkende Antriebsachse wird durch eine Öffnung von außen in das Gehäuse eingeschoben. Die DE 202 08 021 U schlägt vor, die Werkzeugöffnung mit einem Klebefilm zu verschließen, um die Antriebsachse zu sichern und das Eindringen von Schaum zu verhindern.

US 5,452,925 A zeigt einen Paneelverbinder gattungsgemäßer Art, dessen Kupplung und dessen Kloben aus zwei Gehäusehälften zusammengesetzt ist.

Aufgabe der Erfindung ist es, einen Verbinder bereitzustellen, dessen Funktion nach dem Einschäumen in dem Wandpaneel zuverlässig gewährleistet ist..

Gelöst wird die erfindungsgemäße Aufgabe von einem Paneelverbinder mit den Merkmalen des Anspruchs 1.

Die Erfindung sieht vor, dass die Gehäuseöffnung für den Durchtritt des Riegelhakens von einer Abdeckwand verschlossen ist, die bevorzugt von der ersten Gehäusehälfte ausgebildet ist, um bei einem Einschäumen von Kloben oder Kupplung in ein Isolierpaneel ein Eindringen des Schaummaterials in das Gehäuse zu verhindern.

Eine solche Abdeckwand verhindert sicher das Eintreten von Schaummaterial in das Gehäuse und schließt so die vorgenannten Probleme sicher aus.

Auch bei alternativen Wandelementen, die beispielsweise aus flüssigen bis pastösen Kompositmaterialien hergestellt werden, in welche Kupplung oder Kloben eingebettet sind, erweist sich die vorbeschriebene Abdeckwand in gleicher Weise als vorteilhaft, da sie das Eindringen von Wandmaterial verhindert. Auch bei Wänden aus Feststoffen, in welchen die Verbinderbestandteile beispielsweise in Frästaschen eingesetzt werden, sind Abdeckwände vorteilhaft. Sie verhindern das Eindringen von Spänen des Wandmaterials oder Schmutz beim Transport und Montage.

Besonders vorteilhaft lässt sich eine solche Abdeckwand ausbilden, wenn das Gehäuse in Form von zwei Gehäusehälften geteilt ist und die Abdeckwand von einer der Gehäusehälften ausgebildet wird, obgleich es auch denkbar ist, dass jede Gehäusehälfte einen Abdeckwandabschnitt ausbildet, die bei zusammengesetzten Gehäusehälften eine vollständige Abdeckwand bilden.

Bildet jedoch lediglich eine der Gehäusehälften die Abdeckwand aus, ist es möglich, dass eine Stützkontur für die Abdeckwand vorhanden ist, die bevorzugt von der zweiten Gehäusehälfte ausgebildet ist.

Diese Stützkontur gewährleistet, dass auch bei einem auftretenden Druck des Schaummaterials auf die Abdeckwand diese stabil und spaltfrei die Gehäusedurchtrittsöffnung verschließt.

Vorgesehen ist dann, dass die Abdeckwand lamellenartig dünn ausgebildet ist und von einem ausschwenkenden Riegelhaken einfach durchstoßen werden kann. Hierzu kann die Abdeckwand Materialschwächungszonen aufweisen, die den Durchtritt des Riegelhakens erleichtern. Es ist auch möglich, dass die Materialschwächungszonen definiert geometrisch angeordnet sind, um eine Ausbrechen der Abdeckwand entlang bestimmter Konturen und Linien zu gewährleisten. Ein solch definiertes Ausbrechen der Abdeckwand verhindert ungewollte Funktionsbeeinträchtigungen des Paneelverbinders.

Vorgesehen ist außerhalb des Umfangs der Erfindung, dass das Gehäuse wenigstens eine Werkzeugöffnung aufweist, durch welche ein Riegelwerkzeug zum Schwenken des Riegelhakens einführbar ist, und die Werkzeugöffnung von einer Verschlusswand verschlossen ist, um bei einem Einschäumen von Kloben oder Kupplung in ein Isolierpaneel ein Eindringen des Schaummaterials in das Gehäuse zu verhindern.

Diese Verschlusswände verhindern ein Eintreten des Schaummaterials in die Werkzeugöffnung, die gewöhnlich im regulär umschäumten Bereich des Paneels angeordnet ist. Diese Ausführungsform lässt sich besonders vorteilhaft verwirklichen, wenn das Gehäuse zweiteilig ist, da für das Einbringen der körperlichen Achse des Riegelhakens keine Gehäuseöffnung erforderlich ist. Anders als bei beispielsweise DE 10 2004 042 864 A1 ist ein Einbringen von außen nicht erforderlich, da eine Montage im Innenraum des Gehäuses durch dessen Zweiteiligkeit gewährleistet ist.

Auch hinsichtlich der Verschlusswände ergeben sich die oben bereits zur Abdeckwand genannten Vorteile, wenn andere Wandmaterialien, wie Kompositmaterial oder Feststoffe mit Frästaschen genutzt werden. Selbstverständlich ist auch hier vorgesehen, dass eine solche Verschlusswand lamellenartig dünn ausgebildet ist, um leicht durch das Riegelwerkzeug durchbrochen werden zu können. Auch hier lässt sich durch gezieltes Einbringen von Materialschwächungszonen ein definiertes Ausbrechen gewährleisten.

In einer besonders vorteilhaften Ausführungsform ist vorgesehen, dass der Riegelhaken einen in Schwenkrichtung ausgerichteten Durchbruchvorsprung aufweist, der die Abdeckwand beim Verschwenken des Riegelhakens in Eingriffslage aufbricht.

Das Versehen des Riegelhakens mit einem Durchbruchvorsprung eröffnet eine Reihe von Möglichkeiten, das Durchtreten des Riegelhakens durch eine die Durchtrittsöffnung verschließende Abdeckwand zu optimieren und beispielsweise die Durchbruchskräfte zu minimieren.

Der Verbinder gemäß der Erfindung zeichnet sich durch eine vereinfachte Montage bei gleichzeitiger Minimierung der Summe der Bauteile insbesondere der Kupplung aus. Dies rationalisiert und vereinfacht die Fertigung.

Der erfindungsgemäße Verbinder lässt sich für Wandelemente vielfältiger Art verwenden, um diese zur Erstellung eines Raumes aneinander anzuordnen. Auch wenn die Erfindung anhand von Isolierpaneelen beschrieben ist, mit denen Kühlräume aufgebaut werden, ist eine Anwendung vom Möbel- bis hin zum Fertighausbau denkbar. Ein Anwendungszweck kann beispielsweise auch der schnelle Aufbau von Behelfsunterkünften sein, wie sie beispielsweise auf Großbaustellen eingerichtet werden. Soweit die Beschreibung die Begriffe "Verbinder" und "Paneelverbinder" verwendet, stehen diese als Synonyme.

Es ist weiterhin vorgesehen, dass jede Gehäusehälfte ein Lager für ein Ende der Riegelstange des Klobens aufweist, so dass die Riegelstange mit je einem Ende in jeweils einer Gehäusehälfte gelagert ist, wobei die Trennebene der Gehäusehälften quer zur Längsachse der Riegelstange ausgerichtet ist.

Des Weiteren ist alternativ vorgesehen, dass jede Gehäusehälfte ein Lager für die eine Ende der körperlichen Schwenkachse des Riegelhakens aufweist, so dass die körperliche Schwenkachse des Riegelhakens mit je einem Ende in jeweils einer Gehäusehälfte gelagert ist, wobei die Trennebene zwischen den Gehäusehälften quer zur Längsachse der körperlichen Schwenkachse ausgerichtet ist.

Besonders bevorzugt ist jedoch eine Ausführungsform, bei welcher jede Gehäusehälfte sowohl Lager für die Riegelstange als auch Lager für die körperliche Schwenkachse aufweist, so dass die Gehäusehälften wahlweise zur Bildung des Klobens oder der Kupplung nutzbar sind.

Auf diese Weise wird ein aus zwei Gehäusehälften bestehendes Gehäuse geschaffen, welches sowohl als Gehäuse für den Kloben wie auch als Gehäuse für die Kupplung nutzbar ist. Es sind also lediglich zwei Gehäusehälften erforderlich, um entweder eine Kupplung oder einen Kloben herzustellen.

Weitere Merkmale der Erfindung sowie deren Vorteile werden nunmehr anhand eines Ausführungsbeispiels beschrieben. Es zeigen.
- Fig. 1:: eine erfindungsgemäß ausgebildete Kupplung eines Paneelverbinders in Explosionsdarstellung,
- Fig. 2:: einen Riegelhaken der Kupplung gemäß Fig. 1 in perspektivischer Darstellung,
- Fig. 3:: den Riegelhaken gemäß Fig. 2 in Ansicht von oben,
- Fig. 4:: den Riegelhaken gemäß Fig. 2 in Seitenansicht,
- Fig. 5:: die Nockenwelle der Kupplung gemäß Fig. 1 in perspektivischer Ansicht,
- Fig. 6:: die Nockenwelle gemäß Fig. 5 in Seitenansicht,
- Fig. 7:: die erste Gehäusehälfte eines erfindungsgemäßen Paneelverbindergehäuses in perspektivischer Ansicht,
- Fig. 8:: die erste Gehäusehälfte gemäß Fig. 7 in Ansicht auf ihre Innenseite,
- Fig. 9:: eine perspektivische Ansicht der ersten Gehäusehälfte gemäß Fig. 7 auf ihre Außenseite,
- Fig. 10:: die zweite Gehäusehälfte eines erfindungsgemäßen Paneelverbindergehäuses in perspektivischer Ansicht auf die Innenseite,
- Fig. 11:: eine Ansicht auf die Innenseite der Gehäusehälfte gemäß Fig. 10,
- Fig. 12:: eine perspektivische Ansicht der zweiten Gehäusehälfte gemäß Fig. 10 auf die Außenseite,
- Fig. 13:: ein Kloben eines erfindungsgemäßen Paneelverbinders in Explosionsansicht,

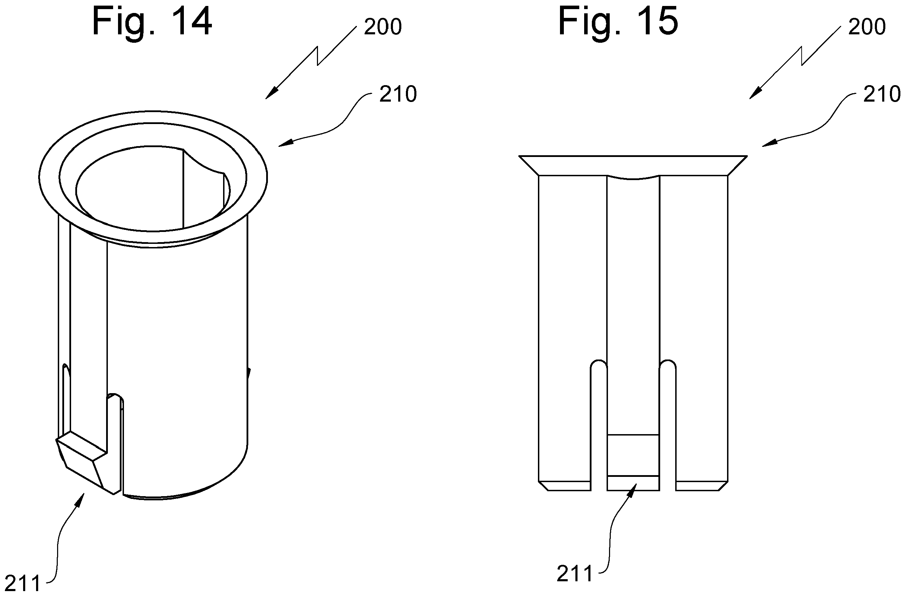

- Fig. 14:: eine perspektivische Ansicht auf die Reduzierhülse eines erfindungsgemäßen Paneelverbinders,
- Fig. 15:: die Reduzierhülse gemäß Fig. 14 in Seitenansicht,

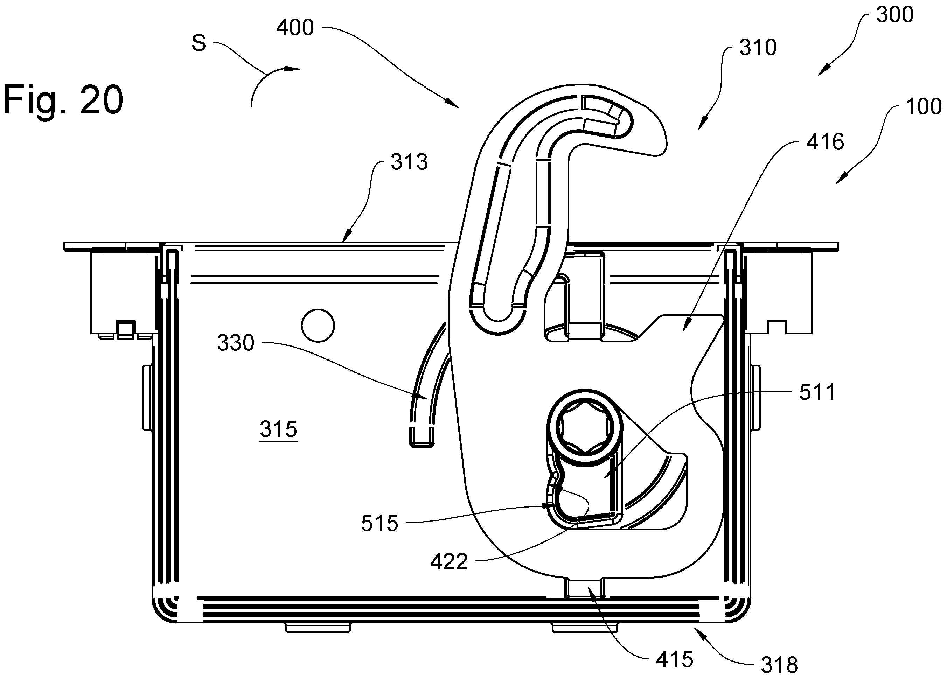

- Fig. 16 bis 20:: Darstellung der ersten Gehäusehälfte des erfindungsgemäßen Paneelverbinders mit montiertem Riegelhaken in verschiedenen Schwenkstellungen

In der nachfolgenden Beschreibung wird die Erfindung anhand des speziellen Einsatzes in Isolierpaneelen für Kühlräume erläutert. Alle Vorteile der Erfindung lassen sich jedoch auch bei der Verwendung mit sonstigen Wandelementen erreichen, beispielsweise im Möbelbau oder dem Bau von Unterkünften von dauerhafter oder provisorischer Art.

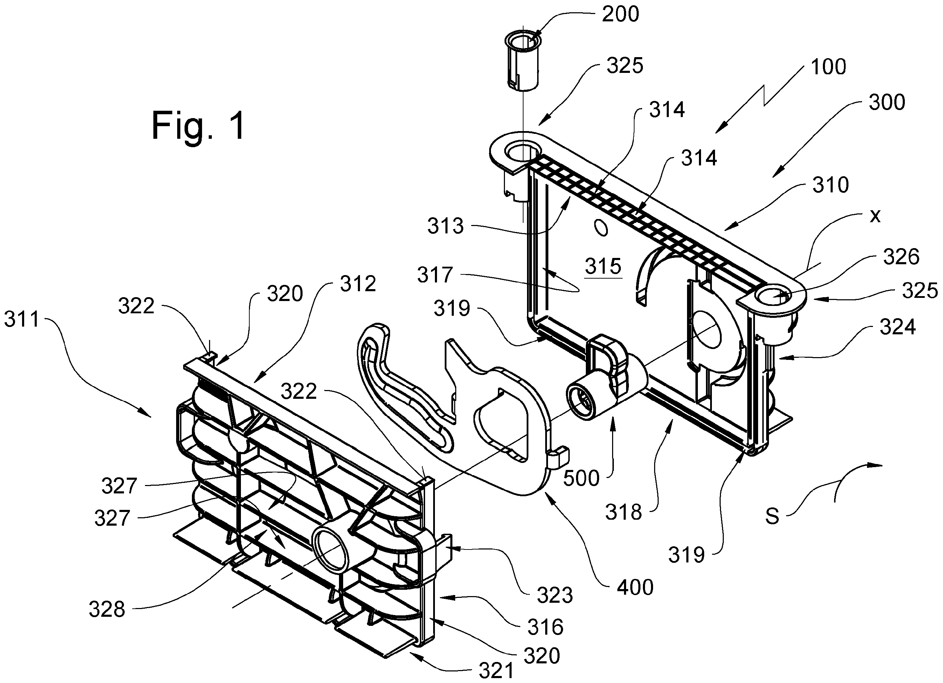

In den Figuren ist ein Paneelverbinder mit seinen verschiedenen Baugruppen und Einzelteilen dargestellt. Der Paneelverbinder umfasst zunächst eine insgesamt mit der Bezugsziffer 100 bezeichnete Kupplung, die in Figur 1 in Explosionsansicht gezeigt ist. Die Kupplung 100 umfasst ein Gehäuse 300, welches aus einer ersten Gehäusehälfte 310 und einer zweiten Gehäusehälfte 311 zusammengesetzt ist. Zwischen den Gehäusehälften 310, 311 sitzt in dem Gehäuse 300 ein Riegelhaken 400 ein, der auf einer Nockenwelle 500 aufsitzt und in Schwenkrichtung S um eine geometrische Schwenkachse X schwenkbar ist.

Das Gehäuse 300 bildet eine Durchtrittsöffnung 312 aus, aus welcher der Riegelhaken 400 im Rahmen einer Schwenkbewegung in Schwenkrichtung S austritt. In der vorliegenden Ausführungsform wird die Durchtrittsöffnung 312 von einer Abdeckwand 313 verschlossen, die nicht zwingend notwendige, aber vorteilhafte Materialschwächungszonen 314 in Form von nutartigen Einprägungen aufweist. Die Materialschwächungszonen sind in einem geometrisch regelmäßigen Muster angeordnet. Dies erlaubt ein definiertes Ausbrechen der Abdeckwand 313 bei einer erstmaligen Schwenkbewegung des Riegelhakens 400 in Schwenkrichtung S.

Die Trennung des Gehäuses 300 erfolgt entlang einer Trennebene, die vertikal zur Durchtrittsöffnung 312 des Gehäuses verläuft, wobei diese Öffnungsebene der Ebene der Abdeckwand 313 entspricht. Das entspricht einer orthogonalen Ausrichtung der Trennebene zur geometrischen Schwenkachse X des Riegelhakens 110.

Die erste Gehäusehälfte 310 verfügt über eine Aufnahmenut 319, die entlang von einander gegenüberliegenden Stirnwänden 317 und einer beide Stirnwände 317 verbindenden Bodenwand 318 der ersten Gehäusehälfte 310 verläuft. In diese Aufnahmenut 319 greifen einander gegenüberliegende Stirnwände 320 und eine beide Stirnwände 320 miteinander verbindende Bodenwand 321 der zweiten Gehäusehälfte 311 ein. Trotz des für das Ineinandergreifen erforderlichen Passungsspiels wird eine ausreichende Abdichtung der Verbindung der Gehäusehälften 310, 311 in diesem Bereich erreicht, welche den Eintritt von Isolierschaummaterial beim Schäumen von Isolierpaneelen wirksam verhindert.

Die zweite Gehäusehälfte 311 bildet eine Stützkontur entlang von Öffnungsschmalseiten und der Öffnungslängsseite aus, die von Auflageflächen 322 gebildet ist. Auf den Auflageflächen 322, die im vorliegenden Ausführungsbeispiel die Stützkontur ausbilden, liegt die von der ersten Gehäusehälfte 310 ausgebildete Abdeckwand 313 bei zusammengesetzten Gehäusehälften 310, 311 auf. Auf diese Weise ist die vergleichsweise dünne Abdeckwand 313 entlang ihrer freien zum zweiten Gehäuse 311 wesenden Längskante abgestützt und gegen mögliche Druckeinwirkung durch Isolierschaummaterial beim Erstellen des Isolierpaneels geschützt. Darüber hinaus ist die Durchtrittsöffnung 312 hierdurch spaltfrei verschlossen.

Die Gehäusehälften 310, 311 werden von Befestigungsmitteln aneinander angeordnet, die im vorliegenden Ausführungsbeispiel als Rasthaken 323 auf Seiten der zweiten Gehäusehälfte 311 und Rastvorsprüngen 324 auf Seiten der ersten Gehäusehälfte 310 gebildet sind. Zur Befestigung der Gehäusehälften 310, 311 aneinander, hintergreifen die Rasthaken 323 die Rastvorsprünge 324, was eine feste und unverlierbare Anordnung beider Gehäusehälften 310, 311 aneinander gewährleistet.

Die erste Gehäusehälfte 310 verfügt über Montagelaschen 325 mit jeweils einer Montageöffnung 326. Diese dienen der Vorverankerung und Ausrichtung des Gehäuses 300 an einem Paneelrahmen zur Fertigung des Isolierstoffpaneels. Die Montageöffnungen 326 weisen einen identischen Durchmesser auf, der mittels Reduzierhülsen 200 verringert werden kann.

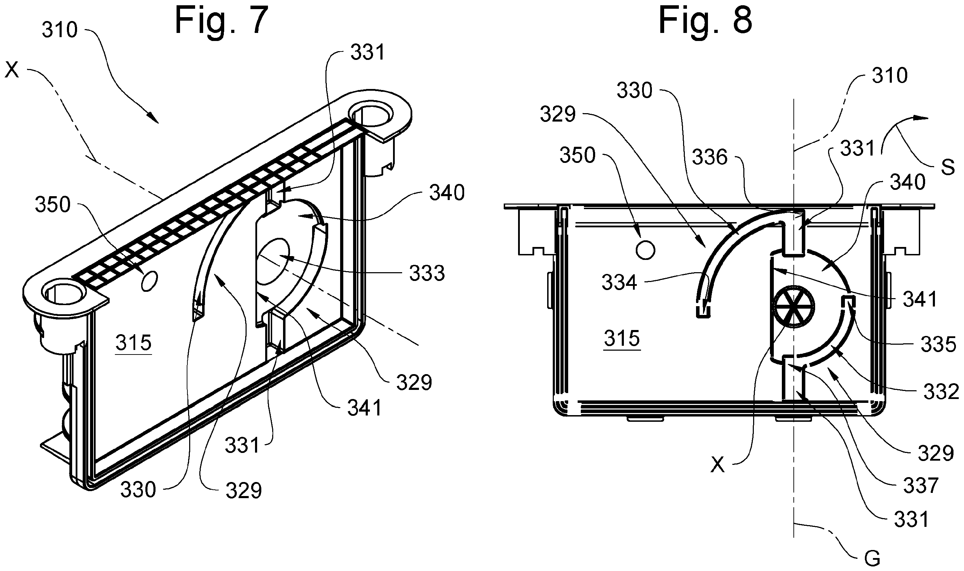

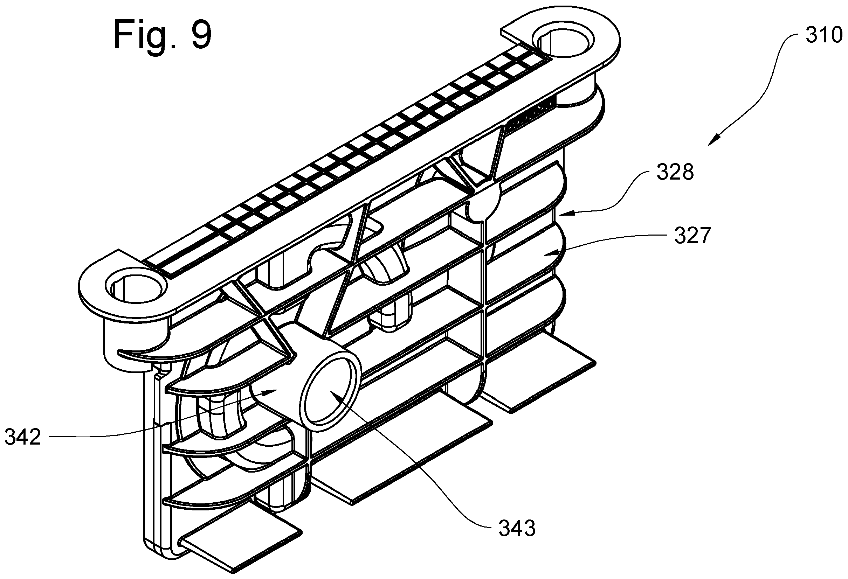

Die Figuren 7 bis 9 zeigen nochmals die erste Gehäusehälfte 310 des Gehäuses 300. Figur 7 zeigt eine perspektivische Ansicht auf die Montageinnenseite 315, wie auch Figur 8 eine Seitenansicht auf die Montageinnenseite 315 zeigt. Die Figur 9 zeigt hingegen die in Figur 1 verdeckte Außenseite der ersten Gehäusehälfte 310.

Kreisbahnartige Kulissenabschnitte 330, 332 sind um die Lageröffnung 333 für die Nockenwelle 500 herum angeordnet und haben die geometrische Schwenkachse X des Riegelhakens 400 als Mittelpunkt, wohingegen der zweite, geradlinige Kulissenabschnitt 331 entlang einer die geometrische Schwenkachse X vertikal durchlaufenden bzw. den gemeinsamen Mittelpunkt der kreisbahnartigen Kulissenabschnitte 330, 332 schneidenden Geraden G verläuft.

Aus insbesondere Figur 9, jedoch auch Figur 8 ist ersichtlich, dass eine Lageröffnung 333 in der Montageinnenseite 315 sacklochartig ausgebildet ist und die die Lageröffnung 333 umgebende Zylindermantelwand 342 (in Figur 8 nicht bezeichnet) nach außen hin durch eine Verschlusswand 343 verschlossen ist. Auch diese Verschlusswand 343 (in Figur 8 nicht bezeichnet) ist mit Materialschwächungszonen in Form von Einprägungen versehen, die in Figur 8 durch sternförmige bzw. speichenförmige Linien dargestellt ist.

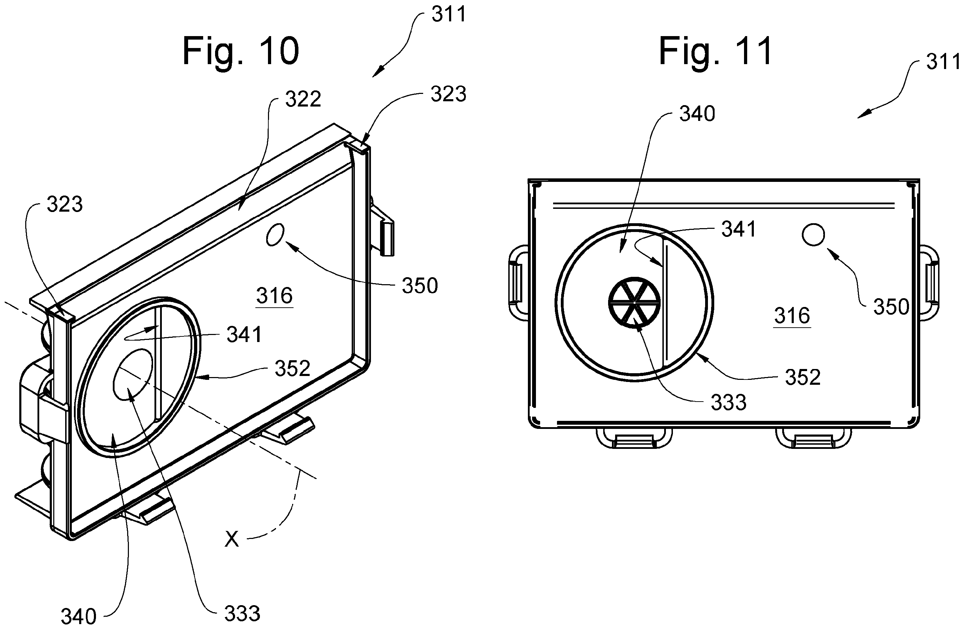

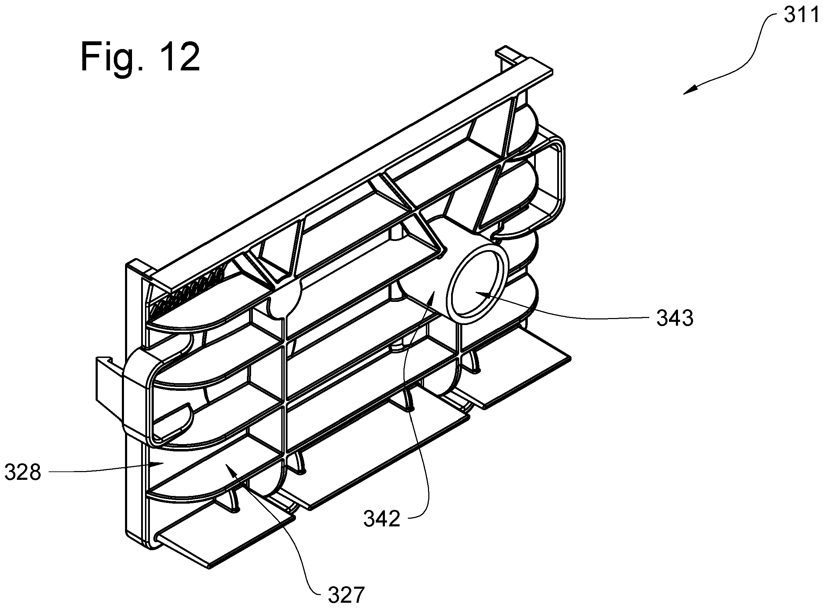

Die Figuren 10 bis 12 zeigen die zweite Gehäusehälfte 311 in verschiedenen Ansichten. Figur 10 zeigt eine perspektivische Ansicht auf die Montageinnenseite 316, eine Ansicht auf die Montageinnenseite 316 zeigt auch Figur 11. Figur 12 ist eine perspektivische Ansicht auf die Außenseite der zweiten Gehäusehälfte 311.

Im Übrigen zeigt Figur 10 die eingangs als Auflagefläche 322 ausgebildete Stützkontur auch entlang der Durchtrittsöffnungslängsseite, worauf lediglich der Vollständigkeit halber hingewiesen sein soll.

Sodann verfügt die zweite Gehäusehälfte 311 ebenfalls über eine Lageröffnung 333 für die Nockenwelle 500. Diese ist ebenfalls sacklochartig ausgebildet, wobei auch hier die Zylindermantelwand 342 (siehe Figur 12) an ihrer außenliegenden Öffnung mit einer Verschlusswand 343 verschlossen ist.

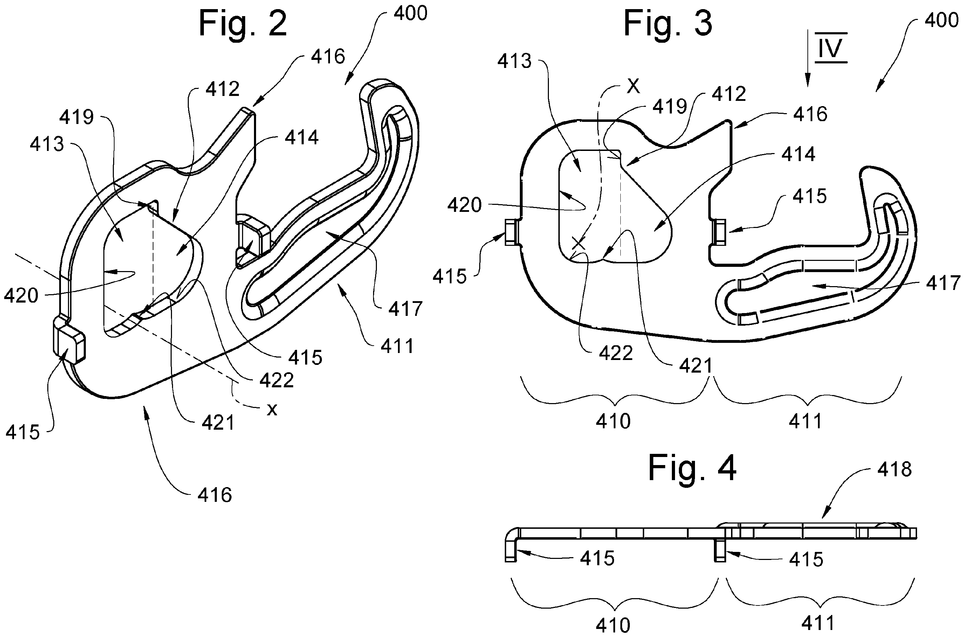

In den Figuren 2 bis 4 ist der Riegelhaken 400 in perspektivischer Ansicht, in Ansicht von oben sowie in Ansicht auf die Schmalseite dargestellt.

Der Riegelhaken 400 lässt sich in einen Aufnahmeabschnitt 410 sowie einen Hakenabschnitt 411 unterteilen.

Der Aufnahmeabschnitt 410 verfügt über eine Steuerkulisse 412, gebildet durch eine Ausnehmung, in welcher die Nockenwelle 500 einsitzt.

Der Aufnahmeabschnitt 410 des Riegelhakens 400 bildet sodann an seinem Außenumfang zwei Steuervorsprünge 415 aus, die hinsichtlich der Schwenkachse X des Riegelhakens einander diametral gegenüberliegen. Im Übrigen verfügt der Aufnahmeabschnitt 410 über einen in Schwenkrichtung ausgerichteten Durchbruchvorsprung 416.

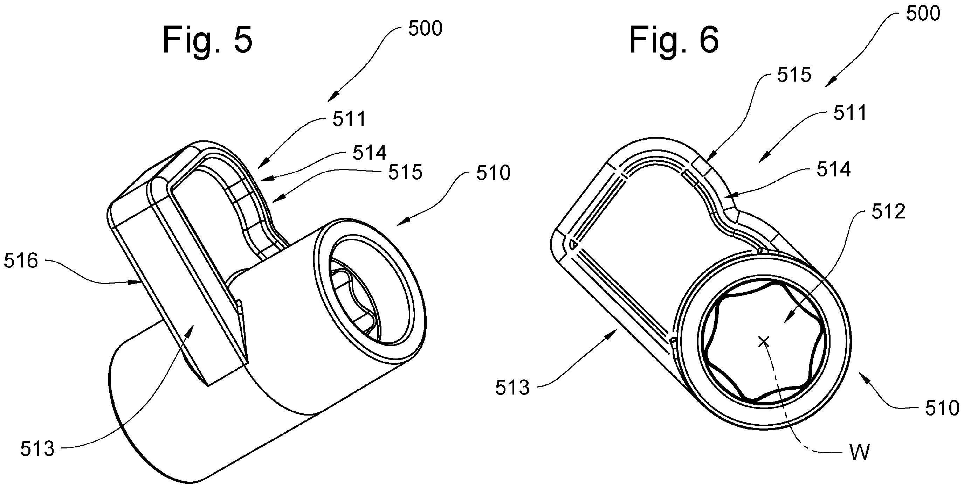

Die Figuren 5 und 6 zeigen die Nockenwelle 500 in perspektivischer Ansicht sowie in Seitenansicht. Die Nockenwelle 500 unterteilt sich in die Welle 510 sowie den Nocken 511, der an der Welle 510 außenumfänglich angesetzt ist.

Die Welle 510 verfügt parallel und konzentrisch zur Wellenachse W über eine Werkzeugausnehmung 512, in welche ein passendes Werkzeug einbringbar ist.

Die Nockenwelle 500 bildet die körperliche Schwenkachse des Riegelhakens 400, die geometrische Wellenachse W fällt mit der Schwenkachse X zusammen.

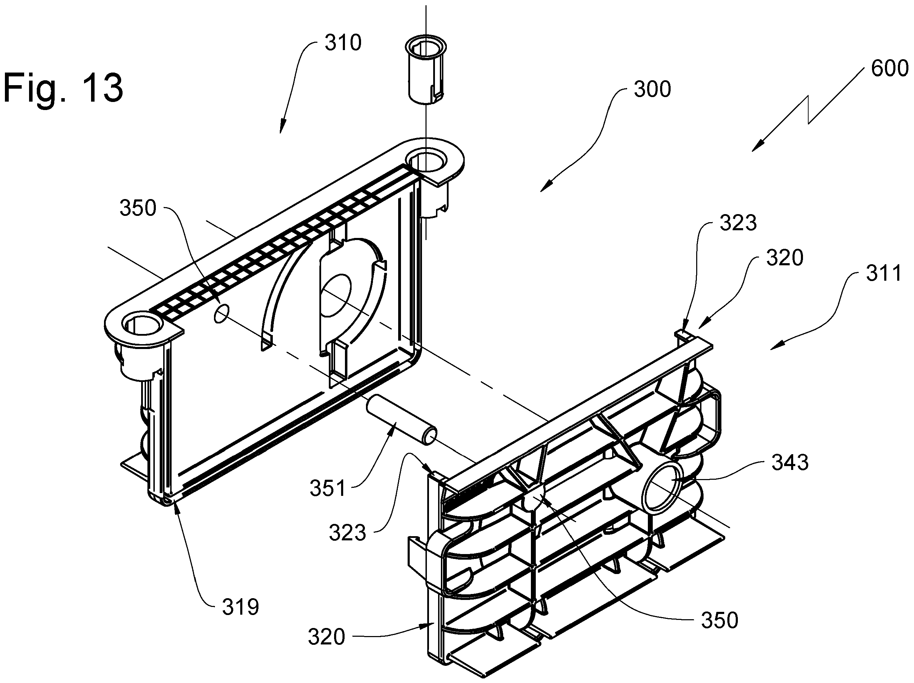

Figur 13 zeigt die zweite Baugruppe des erfindungsgemäßen Paneelverbinders, nämlich den insgesamt mit der Bezugsziffer 600 versehenen Kloben. Auch der Kloben 600 umfasst ein Gehäuse 300, bestehend aus erster Gehäusehälfte 310 und zweiter Gehäusehälfte 311, die im Hinblick auf ihre Ausgestaltung dem zur Kupplung 100 beschriebenen Gehäuse 300 entsprechen, weshalb auf die dortigen Ausführungen verweisen wird. Für die Erstellung des Klobens 600 sind jedoch lediglich die Lagerausnehmungen 350 erforderlich, die die Enden der Riegelstangen 351 aufnehmen und die Riegelstange 351 so im Gehäuse 300 verankern. Die diversen Kulissenbauteile 330, 331, 332, die der Schwenkbewegung des Riegelhakens 400 dienen, könnten hier wegfallen. Es ist jedoch ein Vorteil der Erfindung, dass das Gehäuse 300 der Kupplung wie das Gehäuse 300 des Klobens identisch ausgebildet ist und somit ein und dasselbe Gehäuse 300 für die Herstellung von Kupplung 100 wie Kloben 600 genutzt werden kann.

Herstellung des Klobens:
Wie anhand der Explosionsdarstellung gemäß Figur 13 hervorgeht, lässt sich dank des zweiteiligen Gehäuses die Riegelstange 351 beispielsweise in die Lagerausnehmung 350 der ersten Gehäusehälfte 310 einsetzen. Dabei wird die Riegelstange 351 von der Gehäuseinnenseite in Richtung Gehäuseaußenseite in die Lagerausnehmung 350 eingesetzt, wobei die Lagerausnehmung 350 zur Außenseite hin geschlossen ist. Die so vormontierte Einheit aus erster Gehäusehälfte 310 und Riegelstange 351 wird nun mit der zweiten Gehäusehälfte 311 zusammengefügt. Dabei greifen die Stirnwände 320 sowie die Bodenwand 321 der zweiten Gehäusehälfte 311 in die Aufnahmenut 319 der ersten Gehäusehälfte 310 ein. Die Abdeckwand 313 der ersten Gehäusehälfte 310 kommt zur Auflage auf den die Stützkontur ausbildenden Auflagenflächen 322. Die Lageröffnungen 333 für die im Kloben 600 nicht verwendete Nockenwelle 500 sind nach außen hin durch Verschlusswände 343 geschlossen. Der Klobeninnenraum ist somit gegenüber seiner Außenumgebung im Wesentlichen abgedichtet, so dass beim Erstellen des Isolierpaneels kein Schaummaterial in den Klobeninnenraum eindringen kann.

### Herstellung der Kupplung

In ähnlich einfacher Weise wird die Kupplung 100 des erfindungsgemäßen Paneelverbinders zusammengesetzt, was sich am Einfachsten anhand der Explosionsdarstellung gemäß Figur 1 sowie der Figuren 7 bis 12 erläutern lässt. Zunächst wird die Welle 510 der Nockenwelle 500 in die Lageröffnung 333 eingeschoben, bis der Nocken 511 mit einer der Montageinnenseite 315 zugewandten Wange 514 in der dafür vorgesehenen Aufnahmevertiefung 340 einsitzt. Dabei ist der Nocken 511 sinnvollerweise vertikal in Richtung Durchtrittsöffnung 312 bzw. Abdeckwand 313 ausgerichtet und liegt mit seiner Rückenfläche 513 an der Kreissehnenwand 314 der Aufnahmevertiefung 340 an.

Der Riegelhaken 400 wird auf die Montageinnenseite 315 der ersten Gehäusehälfte 310 aufgelegt, wobei der Aufnahmeraum 413 der Steuerkulisse 412 die Nockenwelle 500 aufnimmt. Dabei liegt die Rückenfläche 513 des Nockens 511 an einem Rückenflächengegenabschnitt 419 der Steuerkulisse 412 an. Die Frontfläche 515 des Nockens 511 weist auf die Nockenabstützfläche 420 der Steuerkulisse 412 des Riegelhakens 400. Die Steuervorsprünge 415 greifen in die Steuerkulisse 329, nämlich in den ersten Kulissenabschnitt 330 sowie den dritten Kulissenabschnitt 332 ein und liegen am jeweils ersten Bewegungsendanschlag 334, 335 der Kulissenabschnitte 330, 332 an.

Der Riegelhaken 400 ist vollständig im Innenraum des Gehäuses 300 angeordnet und in seiner Längserstreckung in etwa parallel zur Ebene der Durchtrittsöffnung 312 bzw. zur Ebene der Abdeckwand 313 ausgerichtet. Er befindet sich in seiner Ruhelage. Nunmehr wird die zweite Gehäusehälfte 311 auf die erste Gehäusehälfte 310 aufgesetzt, wobei die Stirnwände 320 sowie die Bodenwand 321 in die Aufnahmenut 319 der ersten Gehäusehälfte 310 eintauchen. Die Abdeckwand 313 kommt zur Auflage auf den die Stützkontur ausbildenden Auflageflächen 322. Hierbei taucht das zweite Ende der Welle 510 der Nockenwelle 500 in die Lageröffnung 333 der zweiten Gehäusehälfte 311 ein. Der Nocken 511 kommt mit seiner der Montageinnenseite 316 zugewandten Seitenwange 516 zur Anlage in der Aufnahmevertiefung 340 der zweiten Gehäusehälfte 311. Die Rückenfläche 513 des Nocken 511 liegt auch hier an der Kreissehnenwand 341 der Aufnahmevertiefung 340 an.

Die Rasthaken 323 der zweiten Gehäusehälfte 311 hintergreifen die Rastvorsprünge 324 der ersten Gehäusehälfte 310, womit die Kupplung 100 hergestellt ist. Durch die vorhandenen Verschlusswände 343 sowie die Abdeckwand 313 ist der Gehäuseinnenraum der Kupplung 100 gegen das Eindringen von Schaummaterial bei der Herstellung eines Isolierpaneels abgedichtet.

### Bewegung des Riegelhakens

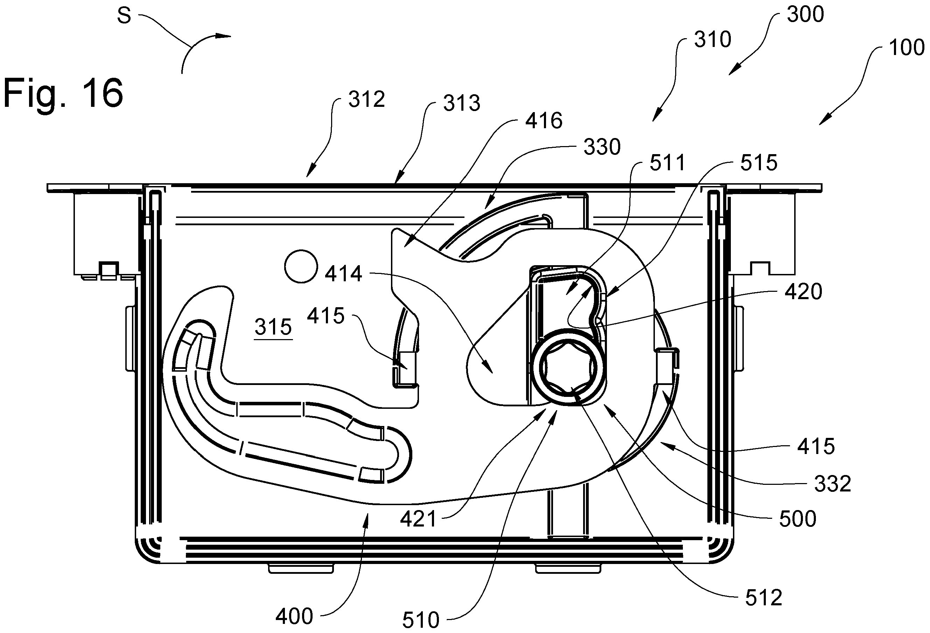

Die Figuren 16 bis 19 zeigen die erste Gehäusehälfte 310 des Gehäuses 300 der Kupplung 100. Gezeigt ist eine Ansicht auf die Montageinnenseite 315 der ersten Gehäusehälfte 310 mit montiertem Riegelhaken 400 und montierter Nockenwelle 500. Bei der vergleichenden Betrachtung der Figuren 16 bis 19 fällt auf, dass der Riegelhaken 400 verschiedene Positionen einnimmt. Anhand der Figuren 16 bis 19 wird im Folgenden der Schwenk- und Bewegungsvorgang des Riegelhakens 400 der Kupplung 100 beschrieben, von seiner Ruhelage über die Eingriffslage bis in die Riegellage beschrieben.

Figur 16 zeigt den Riegelhaken in seiner Ruhelage. In dieser ist er vollständig innerhalb des Gehäuses 300 gelagert.

Ausgehend von der Ruhelage wird der Riegelhaken 400 durch eine Schwenkbewegung in Schwenkrichtung S bewegt, wozu von der Gehäuseaußenseite her ein Schwenkwerkzeug in die Werkzeugausnehmung 512 der Nockenwelle 500 einsetzbar ist. Sofern die Lageröffnung 333 außenseitig mit einer Verschlusswand 343 (in den Figuren 16 bis 19 nicht dargestellt) versehen ist, so wird diese für den Eingriff in die Werkzeugöffnung 512 vom Werkzeug durchstoßen.

Das Ausschwenken des Riegelhakens 400 dient dazu, in das Gehäuse 300 des Klobens 600 einzugreifen und die dort befindliche Riegelstange 351 zu hintergreifen. Hierzu ist der Kloben - in den Figuren 16 bis 19 nicht dargestellt - mit seiner Durchtrittsöffnung 312 der Durchtrittsöffnung 312 der Kupplung 100 zugewandt, so dass der Riegelhaken 400 die Durchtrittsöffnungen 312 von Kupplung 100 und Kloben 600 durchtritt.

Der Riegelhaken 400 sitzt mit seinen Steuervorsprüngen 415 in dem ersten Kulissenabschnitt 330 und dritten Kulissenabschnitt 332 ein, welche die rotative Schwenkbewegung des Riegelhakens 400 steuern. Durch Drehen der Nockenwelle 500 in Schwenkrichtung S stützt sich die Frontfläche 515 des Nockens 511 an der Nockenabstützfläche 420 der riegelhakenseitigen Steuerkulisse 412 ab. Die Welle 510 stützt sich mit ihrem Außenumfang an einer in Richtung Steuerkulisseninnenraum bzw. in Richtung Aufnahmeraum 413 des Riegelhakens 400 vorspringenden Stütznase 421 ab. Die Stütznase 421 hält gegen die vom Nocken 511 bei einem Schwenken in Schwenkrichtung S erzeugten Umfangskräfte und verhindert ein Eintauchen der Welle 510 in den Ausweichraum 414 der riegelhakenseitigen Steuerkulisse 412 während des Schwenkvorgangs.

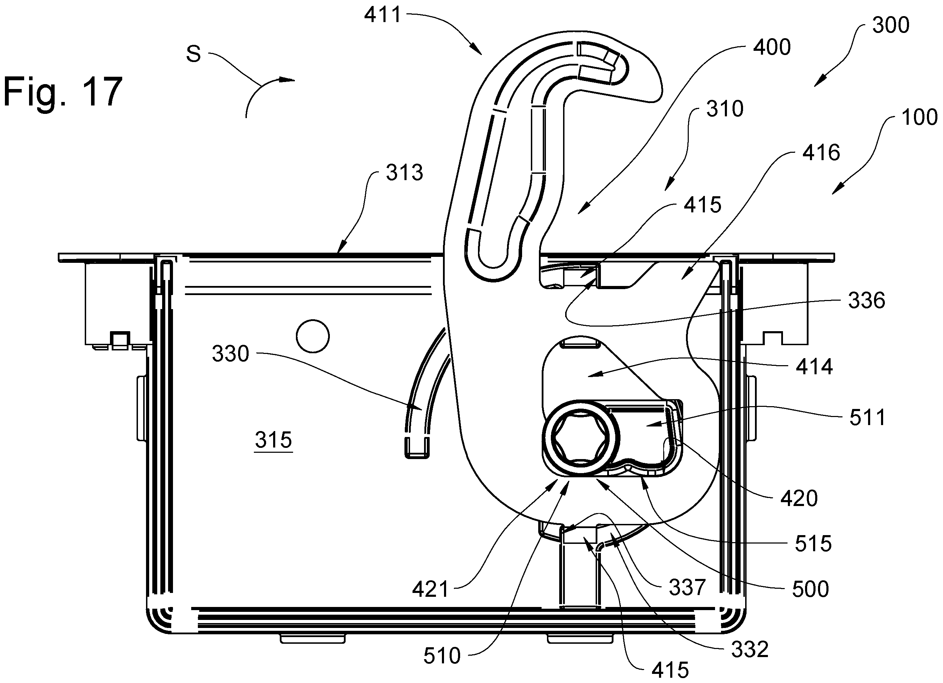

In Figur 17 befindet sich der Riegelhaken 400 in seiner Eingriffslage. Das Ausschwenken des Riegelhakens 400 findet nach einer Schwenkbewegung um etwa 90° ein Ende, indem die Steuervorsprünge 415 am jeweiligen zweiten Bewegungsendanschlag 336, 337 des ersten Kulissenabschnittes 330 bzw. des dritten Kulissenabschnittes 332 anschlagen.

In der Eingriffsstellung sitzt der Hakenabschnitt 411 des Riegelhakens 400 im Gehäuse 300 des Klobens 600 ein und hintergreift die dort befindliche Riegelstange 351.

In dieser Stellung des Riegelhakens 400 befinden sich dessen Steuervorsprünge 415 im Eintrittsbereich des zweiten, geradlinigen Kulissenabschnittes 331, der sich zwischen den zweiten Endanschlägen 336, 337 des ersten Kulissenabschnittes 330 und des dritten Kulissenabschnittes 332 erstreckt.

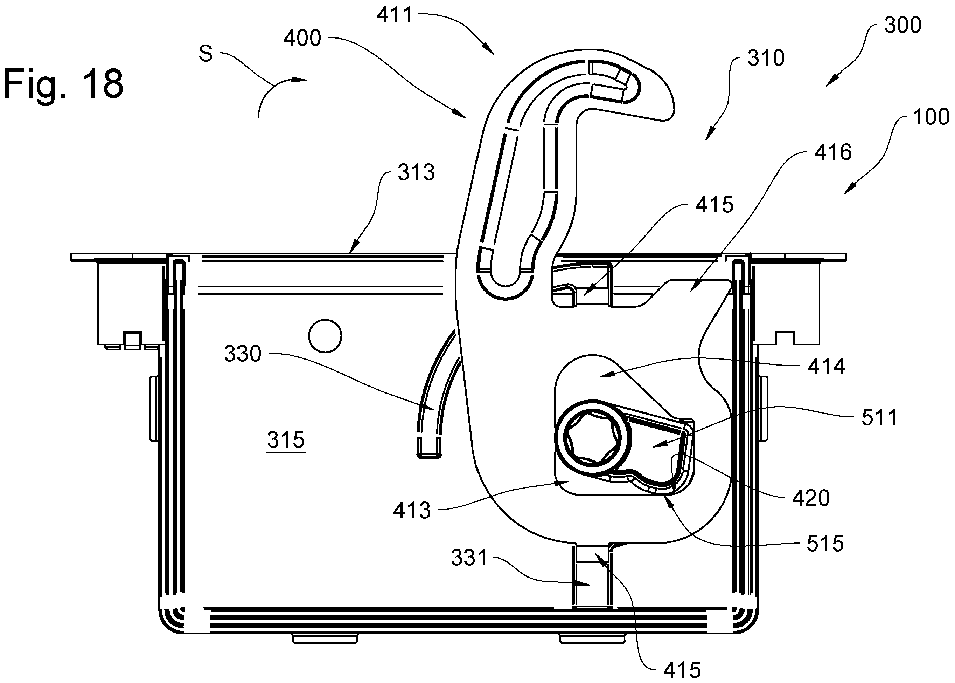

Bei einem weiteren Drehen der Welle 510 in Schwenkrichtung S drängt der Nocken 511 verstärkt gegen die Nockenabstützfläche 420. Da eine weitere Rotationsbewegung des Riegelhakens 400 durch die Bewegungsendanschläge 336, 337 nicht möglich ist, nehmen die bislang von der Stütznase 421 abgefangenen Kräfte zu. Das Bewegungsspiel von der Welle 510 und dem Nocken 511 im Aufnahmeraum 413 ermöglicht bei ausreichender Umfangskraft nunmehr einen Überhub der Welle 510 über die Stütznase 421, wie dies in Figur 18 dargestellt ist. Dieser Überhub führt gleichzeitig zu einer Verlagerung des Riegelhakens 400 entlang des zweiten Kulissenabschnittes 332 linear in das Kupplungsgehäuse hinein und zum Übertritt der Welle 510 vom Aufnahmeraum 413 in den Ausweichraum 414 der Steuerkulisse 412.

Die lineare Rückverlagerungsbewegung des Riegelhakens 400 hinein in das Gehäuse 300 der Kupplung 100 - im Hinblick auf die Zeichnungsebene der Figur 18 eine Bewegung nach unten - wird durch die in den zweiten Kulissenabschnitt 331 eingreifenden Steuervorsprünge 415 des Riegelhakens 415 gesteuert. Über diese Linearbewegung wird der Riegelhaken 400 in seiner Riegellage bewegt, in welcher er gegen die nicht dargestellte Riegelstange 351 des Klobens 600 verspannt ist.

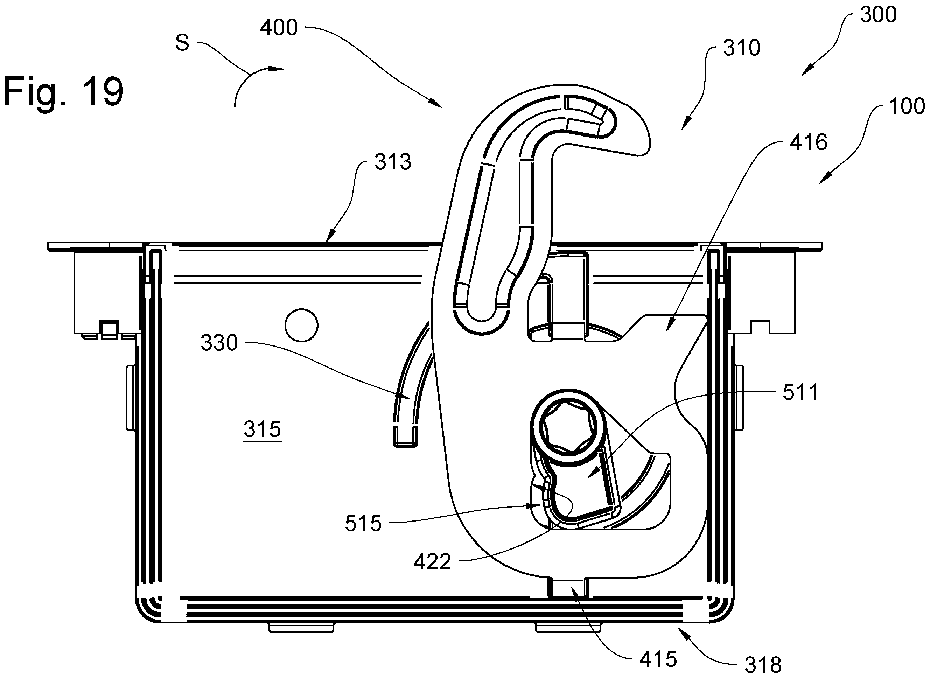

Die Riegellage des Riegelhakens 400 ist in Figur 19 dargestellt. Der Riegelhaken 400 hat seine linear in das Gehäuse 300 der Kupplung 100 gerichtete Bewegung durch Aufsitzen des bodenwandnahen Steuervorsprungs 415 an der Bodenwand 318 bzw. einem nicht näher bezeichneten Bewegungsendanschlag des zweiten Kulissenabschnittes 331 beendet. In dieser Position des Riegelhakens 400 sind die miteinander zu verbindenden Paneele fest miteinander gekoppelt und gegeneinander verspannt.

Die Figuren 16 bis 19 lassen auch erkennen, wie eine Durchbrechung der Abdeckwand 313 durch den Riegelhaken 400 erfolgt.

Beim Verschwenken des Riegelhakens 400 in Schwenkrichtung S trifft der Durchbruchvorsprung 416 voreilend oder, bei entsprechender Ausgestaltung des Riegelhakens 400, gleichzeitig mit dem Hakenabschnitt 411 auf die Abdeckwand 313 auf. Eine fortgesetzte Schwenkbewegung führt zu einem Durchbrechen der Abdeckwand 313, so dass der Hakenabschnitt 411 des Riegelhakens 400 aus dem Gehäuse 300 der Kupplung 100 austreten kann. Beim Austritt treffen sowohl der Hakenabschnitt 411 als auch der Durchbruchvorsprung 416 ggf. auf die Abdeckwand 313 des Gehäuses 300 des Klobens 600. Hier erfolgt der Durchbruchvorgang analog, so dass der Hakenabschnitt 411 des Riegelhakens 400 in das Gehäuse 300 des Klobens 600 einzudringen vermag.

Hinzuweisen ist noch, wenn auch nicht gesondert dargestellt, die Funktion von Rippe 352 auf Seiten der zweiten Gehäusehälfte 311 und der Materialaufwölbung 418 des Riegelhakens 400 mit eben jener zweiten Gehäusehälfte 311.

Der Aufnahmeabschnitt 410 liegt bei zusammengesetzten Gehäusehälften 310, 311 auf der Rippe 352 der Montageinnenseite 316 der zweiten Gehäusehälfte 311 auf. Hierdurch wird eine lediglich sehr geringe Auflagefläche des Aufnahmeabschnittes 411 an der Montageinnenseite 316 der zweiten Gehäusehälfte 311 sichergestellt, was zu einer Reibungsminimierung bei der Schwenkbewegung führt.

Die Materialaufwölbung 418 liegt ebenfalls an der Montageinnenseite 316 der zweiten Gehäusehälfte 311 an. Die Materialaufwölbung 418 entspricht in ihrer Stärke etwa der Rippe 352. Auf diese Weise wird der Haken 400 während seiner Schwenkbewegung gegen Querkräfte stabilisiert, so dass Kippbewegungen des Regelhakens 400 während des Ausschwenkvorganges sicher vermieden werden.

### Bezugszeichenliste

- 100: Kupplung

- 200: Reduzierhülse
- 210: Auflagerand
- 211: Rastarm

- 300: Gehäuse
- 310: erste Gehäusehälfte
- 311: zweite Gehäusehälfte
- 312: Durchtrittsöffnung
- 313: Abdeckwand
- 314: Materialschwächungszonen
- 315: Montageinnenseite von 310
- 316: Montageinnenseite von 311
- 317: Stirnwand von 310
- 318: Bodenwand von 310
- 319: Aufnahmenut
- 320: Stirnwand von 311
- 321: Bodenwand von 311
- 322: Auflagefläche / Stützkontur
- 323: Rasthaken
- 324: Rastvorsprung
- 325: Montagelasche
- 326: Montageöffnung
- 327: Rippe
- 328: Vertiefung
- 329: Steuerkulisse
- 330: erster Kulissenabschnitt
- 331: zweiter Kulissenabschnitt
- 332: dritter Kulissenabschnitt
- 333: Lageröffnung von 311
- 334: erster Bewegungsendanschlag von 330
- 335: erster Bewegungsendanschlag von 332
- 336: zweiter Bewegungsendanschlag von 330
- 337: zweiter Bewegungsendanschlag von 332
- 340: Aufnahmevertiefung
- 341: Kreissehnenwand
- 342: Zylindermantelwand
- 343: Verschlusswand

- 350: Lagerausnehmung
- 351: Riegelstange
- 352: Rippe

- 400: Riegelhaken
- 410: Aufnahmeabschnitt
- 411: Hakenabschnitt
- 412: Steuerkulisse
- 413: Aufnahmeraum
- 414: Ausweichraum
- 415: Steuervorsprung
- 416: Durchbruchvorsprung
- 417: Prägung
- 418: Materialaufwölbung
- 419: Rückenflächengegenabschnitt
- 420: Nockenabstützfläche
- 421: Stütznase
- 422: Anschlagfläche

- 500: Nockenwelle
- 510: Welle
- 511: Nocken
- 512: Werkzeugausnehmung
- 513: Rückenfläche
- 514: Seitenwange
- 515: Frontfläche
- 516: Seitenwange

- 600: Kloben

- G: Gerade
- S: Schwenkrichtung
- X: geometrische Schwenkachse
- W: Wellenachse

## Patentansprüche

1. Verbinder zur Kopplung mehrerer Wandelemente, wie Wandpaneele, insbesondere Isolierpaneele, aneinander, mittels derer Räume, insbesondere Kühlräume aufgebaut werden,
- mit einer Kupplung (100), die ein Lager (333) für einen Riegelhaken (400) und einen Riegelhaken (400) aufweist, der aus einer Ruhelage in eine Eingriffslage schwenkbar und in eine Riegellage bewegbar ist,
- mit einem Kloben (600), der über eine in einem Lager (350) einsitzende Riegelstange (351) verfügt,
wobei der Riegelhaken (400) in seiner Riegellage die Riegelstange (350) hintergreift,
- mit einem Gehäuse (300) von Kupplung (100) oder Kloben (600), welches eine Gehäusedurchtrittsöffnung (312) aufweist, welche der Riegelhaken (400) bei seiner Schwenkbewegung von der Ruhelage in die Eingriffslage durchtritt, wobei
- das Gehäuse (300) aus einer ersten Gehäusehälfte (310) und einer zweiten Gehäusehälfte (311) zusammengesetzt ist,
**dadurch gekennzeichnet, dass**
- die Gehäusedurchtrittsöffnung (312) für den Durchtritt des Riegelhakens (400) von einer Abdeckwand (313) verschlossen ist, die von wenigstens einer der Gehäusehälften (310, 311) einstückig stoffschlüssig ausgebildet ist, um bei einem Einschäumen von Kloben (600) oder Kupplung (100) in ein Isolierpaneel ein Eindringen des Schaummaterials in das Gehäuse (300) zu verhindern.

2. Verbinder nach Anspruch 1, **dadurch gekennzeichnet, dass** die Abdeckwand (313) oder die Verschlusswand (343) Materialschwächungszonen (314) aufweisen, entlang derer die Abdeckwand (313) oder die Verschlusswand (343) durchbrochen werden können.

3. Verbinder nach Anspruch 1, **dadurch gekennzeichnet, dass** bei vorhandener Abdeckwand (313) eine Stützkontur (322) für die Abdeckwand (313) vorhanden ist, die von der anderen Gehäusehälfte (310, 311) ausgebildet ist.

4. Verbinder nach Anspruch 1, **dadurch gekennzeichnet, dass** bei vorhandener Abdeckwand (313) der Riegelhaken (400) einen in Schwenkrichtung S ausgerichteten Durchbruchvorsprung (416) aufweist, der die Abdeckwand (313) beim Verschwenken des Riegelhakens (400) in Eingriffslage aufbricht.

## Claims

1. Connector for coupling several wall elements, such as a wall panel, in particular an insulating panel, to one another, by means of which chambers, in particular cooling chambers, can be constructed,
- having a coupling (100), which has a mount (333) for a latching hook (400), and a latching hook (400) that can be pivoted out of a rest position into an engagement position and can be moved into a latching position,
- having a bracket (600), which has a latch bar (351) resting in a mount (350), wherein the latching hook (400) in its latching position engages behind the latch bar (350),
- having a housing (300) of coupling (100) or bracket (600), which has a housing passage opening (312), which the latching hook (400) passes through during its pivoting movement from the rest position into the engagement position, wherein
- the housing (300) is made up of a first housing half (310) and a second housing half (311),
**characterised in that**
- the housing passage opening (312) for the passage of the latching hook (400) is closed by a covering wall (313) which is formed integrally in a firmly bonded manner from at least one of the housing halves (310, 311) in order to prevent the foam material penetrating the housing (300) in the event of bracket (600) or coupling (100) foaming into an insulation panel.

2. Connector according to claim 1, **characterised in that** the covering wall (313) or the closing wall (343) have material weakness zones (314), along which the covering wall (313) or the closing wall (343) can be pierced through.

3. Connector according to claim 1, **characterised in that**, when the covering wall (313) is present, a supporting contour (322) for the covering wall (313) is present, which is formed from the other housing half (310, 311).

4. Connector according to claim 1, **characterised in that**, when the covering wall (313) is present, the latching hook (400) has a piercing protrusion (416) aligned in the pivoting direction S, said piercing protrusion forcing open the covering wall (313) when pivoting the latching hook (400) in the engagement position.

## Revendications

1. Connecteur pour accoupler entre eux plusieurs éléments muraux tels que des panneaux muraux, en particulier des panneaux isolants, au moyen des quels des locaux, en particulier des chambres froides, sont construits,
- avec un couplage (100) qui présente un logement (333) pour un crochet de verrouillage (400) et un crochet de verrouillage (400) qui peut pivoter d'une position de repos dans une position d'accrochage et peut être déplacé dans une position de verrouillage,
- avec un gond (600) qui dispose d'une tige de verrouillage (351) insérée dans un logement (350),
le crochet de verrouillage (400) s'agrippant dans sa position de verrouillage derrière la tige de verrouillage (351),
- avec un boîtier (300) de couplage (100) ou de gond (600) qui présente une ouverture de traversée de boîtier (312) que le crochet de verrouillage (400) traverse en pivotant de la position de repos dans la position d'accrochage,
- le boîtier (300) étant composé d'une première moitié de boîtier (310) et d'une deuxième moitié de boîtier (311),
**caractérisé en ce que**
- l'ouverture de traversée de boîtier (312) destinée à la traversée du crochet de verrouillage (400) est obturée par une bande de recouvrement (313) qui est solidaire par liaison de matière avec au moins une des moitiés de boîtier (310, 311) pour éviter que, lors d'un enrobage de mousse du gond (600) ou du couplage (100) dans un panneau isolant, la matière moussante pénètre dans le boîtier (300).

2. Connecteur selon la revendication 1, **caractérisé en ce que** la bande de recouvrement (313) ou la bande d'obturation (343) présentent des zones d'affaiblissement de matière (314) le long desquelles la bande de recouvrement (313) ou la bande d'obturation (343) peuvent être perforées.

3. Connecteur selon la revendication 1, **caractérisé en ce qu'**en cas de présence d'une bande de recouvrement (313), est présent un contour d'appui (322) pour la bande de recouvrement (313) qui est formé par l'autre moitié de boîtier (310, 311).

4. Connecteur selon la revendication 1, **caractérisé en ce qu'**en cas de présence d'une bande de recouvrement (313), le crochet de verrouillage (400) présente un ergot perçant (416) orienté dans la direction de pivotement (S) qui brise la bande de recouvrement (313) lorsque le crochet de verrouillage (400) pivote en position d'accrochage.
